## Europäisches Patentamt

## European Patent Office

## Office européen des brevets

(19)

(11) **EP 0 742 664 B1**

(12) **EUROPÄISCHE PATENTSCHRIFT**

(45) Veröffentlichungstag und Bekanntmachung des
Hinweises auf die Patenterteilung:
**22.12.2004 Patentblatt 2004/52**

(51) Int Cl.⁷: **H04M 9/00**, H04M 9/08,
H04M 1/60

(21) Anmeldenummer: **96106492.0**

(22) Anmeldetag: **25.04.1996**

(54) **Freisprechverfahren für ein mehrkanaliges Übertragungssystem**

Method for hand-free talking for a multi-channel transmission system

Méthode pour parler à main levée pour un système de transmission à canaux multiples

(84) Benannte Vertragsstaaten:
**AT BE CH DE ES FR GB IT LI NL SE**

(30) Priorität: **12.05.1995 DE 19517469**

(43) Veröffentlichungstag der Anmeldung:
**13.11.1996 Patentblatt 1996/46**

(73) Patentinhaber: **ALCATEL**
**75008 Paris (FR)**

(72) Erfinder: **Walker, Michael**
**73666 Baltmannsweiler 2 (DE)**

(74) Vertreter: **Rausch, Gabriele, Dr. et al**
**Alcatel**
**Intellectual Property Department Stuttgart**
**70430 Stuttgart (DE)**

(56) Entgegenhaltungen:
**DE-A- 4 229 912        DE-A- 4 305 256**

- **PETER HEITKÄMPER: "Freisprechen mit Verstärkungssteuerung und Echokompensation" FORTSCHRITT-BERICHTE VDI, Bd. 10, Nr. 380, 22. September 1995 (1995-09-22), Seiten 1-172, XP002241704**
- **HEITKÄMPER, WALKER: "Stereophonic and Multichannel Hands-Free Speaking" IWAENC: INTERNATIONAL WORKSHOP ON ACOUSTIC ECHO AND NOISE CONTROL, Juni 1995 (1995-06), Seiten 53-56, XP009011075 Roros**

## Beschreibung

Die Erfindung betrifft ein Freisprechverfahren für ein mehrkanaliges Übertragungssystem, nämlich für stereophones Freisprechen zur Übertragung der räumlichen Akustik und für mehrkanaliges Freisprechen zur Reproduktion verschiedener Sprecherorte an einem Konferenztisch oder für Konferenzen bei denen eine Vielzahl von Teilnehmern aus mehreren lokal getrennten Räumen zusammengeschaltet werden. Bei einem einkanaligen Übertragungssystem, beispielsweise bei einer Freisprecheinrichtung für Telefone, wurde bereits eine Vielzahl von Problemen bearbeitet, die sich aus der Kopplung zwischen Lautsprecher und Mikrofon, aus dem Einfluß des Umgebungsgeräusches und aus der Beherrschung der Gegensprechsituation ergeben.

So ist beispielsweise eine Schaltungsanordnung zur Dynamiksteuerung eines Endgerätes bekannt, bei der mit einem steuerbaren Dynamik-Kompander der Verstärkungsgrad der von einem Mikrofon gelieferten Signalspannungen an den Spannungswert dieser Signalspannungen angepaßt wird, vgl. DE 37 24 346 A1. Damit wird erreicht, daß bei mehreren die Freisprecheinrichtung eines Teilnehmers benutzenden Personen, diese für den Teilnehmer auf der Gegenseite so wirken, als würden sie sich in dem gleichen Abstand vom Endgerät befinden und als würden sie mit gleicher Lautstärke sprechen, während Störgeräuschquellen kaum Einfluß auf die Übertragung haben und die störende Halligkeit vermieden wird.

Weiterhin ist ein Verfahren zum Verbessern der Übertragungseigenschaften einer elektroakustischen Anlage bekannt, mit dem die Lage der Kompanderkennlinie automatisch gesteuert wird, vgl. DE 42 29 912 A1. Dabei wird erkannt, ob das Sendesignal von der Sprache oder von einem Geräusch herrührt und mittels der aus der Sprach- und Geräuscherkennung erzeugten Steuergröße für die Kompanderkennlinie erreicht wird, daß die zu übertragende Sprache mit konstantem Pegel gesendet wird, daß mit zunehmendem Umgebungsgeräusch die Empfangslautstärke angehoben wird und daß der Geräuschpegel für die Übertragung abgesenkt wird.

Eine weitere Verbesserung der Freisprechqualität wird erreicht, wenn dem Kompander ein gesteuerter Echokompensator vorgeschaltet oder eine sprachgesteuerte Waage nachgeschaltet wird, vgl. DE 43 05 256 A1.

Schließlich ist bereits eine Methode vorgeschlagen worden, nach der die aktuelle Kopplung zwischen Lautsprecher und Mikrofon festgestellt wird, um die gewünschte systembedingte Echodämpfung bei möglichst geringer Beeinflussung der Gegensprechqualität zu erreichen.

Zwar sind viele Probleme beim einkanaligen Freisprechen bekannt und teilweise auch gelöst, die Lösungen sind jedoch nicht direkt bei mehrkanaligen Übertragungssystemen einsetzbar, da bei mehrkanaligen Übertragungssystemen mehrfache Kopplungen zwischen den im gleichen Raum befindlichen Lautsprechern und Mikrofonen zu berücksichtigen sind. Bei n-kanaligen Übertragungssystemen treten $n^2$ Kopplungen auf. Für ein zweikanaliges Übertragungssystem ist eine Anordnung bekannt, bei der für jeden Kanal ein Echokompensator eingesetzt wird, vgl. Hirano A., Sugiyama A.: A Compact Multi-Channel Echo Canceller with a Single Adaptive Filter per Channel. Proc. ISCAS 1992, San Diego, California, 1992, S. 1922 bis 1925. Jeder Echokompensator wird durch ein adaptives digitales Filter realisiert. In der Veröffentlichung wird beschrieben, daß es beim Einsatz von vier adaptiven Filtern, die für die Kompensation der von den vier möglichen Kopplungen herrührenden Echos keine eindeutige optimale Lösung für die Einstellung der Filterkoeffizienten gibt. Die angegebene Lösung mit zwei digitalen Filtern beruht darauf, daß in Abhängigkeit vom Eingangssignal des rechten und linken Lautsprechers auf jeweils ein digitales Filter umgeschaltet wird und die Impulsantwort am rechten Mikrofon vom rechten und linken Lautsprecher ausgewertet wird. Die Berechnung der Filterkoeffizienten ist aber nur korrekt, wenn ein Mikrofon nur von einem Lautsprecher Signale empfängt. Die Auswertung von Summen- oder Differenzsignalen wie hier beschrieben, birgt die Gefahr der Fehlmessungen und kann die Instabilität des Systems zur Folge haben. Weiterhin ist der Einsatz digitaler Filter bei mehrkanaligen Übertragungssystemen sehr aufwendig, da beispielsweise für ein dreikanaliges System neun Filter berechnet werden müssen. Beispielsweise beträgt die erforderliche Arbeitsgeschwindigkeit eines Rechners bei einer Abtastrate von 24 kHz und einer Filterlänge von 1000 Koeffizienten, entsprechend einem Zeitfenster von 41 ms, 864 Million Instructions per second.

Bekannt ist weiterhin ein mehrkanaliges Übertragungssystem, bei dem je Lautsprecher und Mikrofon ein digitales Filter eingesetzt wird, vgl. EP 627 825 A2. Dabei wird über eine Detektorschaltung der Kanal zur Berechnung der Filterkoeffizienten ausgewählt, bei dem am Lautsprecher das Signal mit der größten Leistung auftritt. Um den Aufwand zu begrenzen, wird bei dieser Lösung ein Kompromiß zwischen der Anzahl der adaptiven Filter und dem Qualitätsgewinn durch Echokompensation gemacht.

Es besteht nun die Aufgabe, ein Freisprechverfahren für ein mehrkanaliges Übertragungssystem anzugeben, das ohne den Einsatz adaptiver digitaler Filter auskommt und das im Vergleich zu bereits bekannten Lösungen mit geringerem Aufwand alle Kopplungsmöglichkeiten zwischen Lautsprechern und Mikrofonen berücksichtigt und mit dem eine natürliche Unterhaltung zwischen mehreren Personen ermöglicht wird.

Erfindungsgemäß wird diese Aufgabe durch das im ersten,zweiten und siebenten Patentanspruch beschriebene Verfahren und durch die im achten Patentanspruch beschriebene Schaltungsanordnung gelöst. In den Unteransprüchen 3 und 4 sind Bedingungen angegeben, unter denen die Verfahrensschritte die besten Ergebnisse liefern. In den Unteransprüchen 5 und 6 sind Realisierungsmöglichkeiten zur Bestimmung des Kopplungsfaktors angegeben.

Mit der Erfindung werden für ein mehrkanaliges System sowie für ein stereophones System als Spezialfall eines mehrkanalige Systems kostengünstige Freisprechverfahren angegeben. Das Wesen der Erfindung besteht darin, daß aus der Vielzahl der möglichen Kopplungsfaktoren zwischen Lautsprechern und Mikrofonen durch bestimmte Entscheidungsbedingungen stets der jeweilige größte aktuelle Kopplungsfaktor zur Einstellung der Übertragungsfunktion eines Kompanders verwendet wird. Da die einzelnen Kopplungsfaktoren getrennt zur Verfügung stehen, ist eine optimale Einstellung der Mikrofonempfindlichkeit im Gegensprechund Empfangsbetrieb möglich. Durch die Geräuschunterdrückung an jedem Mikrofon lassen sich Systeme mit großen Teilnehmerzahlen realisieren, ohne den Störabstand zu beeinträchtigen. Die Halligkeit, die durch akustische Kopplung des Sprechers auf benachbarte Mikrofone entsteht, wird abgeschwächt.

Die Erfindung wird nachstehend an einem Ausführungsbeispiel erläutert. In der dazugehörigen Zeichnung zeigen

Fig. 1   eine Anordnung für ein dreikanaliges Übertragungssystem,
Fig. 2   eine Schaltungsanordnung zur Bestimmung der Sende- und Empfangsverstärkung für ein einkanaliges Übertragungssystem,
Fig. 3   ein Zeitdiagramm zur Darstellung einer Gegensprechsituation,
Fig. 4   eine Schaltungsanordnung zur Schätzung des akustischen Kopplungsfaktors,
Fig. 5   ein Schaltbild für eine dreikanalige Freisprechanordnung nach dem erfindungsgemäßen Verfahren,
Fig. 6   ein Blockschaltbild für die erfindungsgemäße Schätzung des Kopplungsfaktors für ein dreikanaliges Übertragungssystem und
Fig. 7   eine Schaltungsanordnung für stereophones Freisprechen.

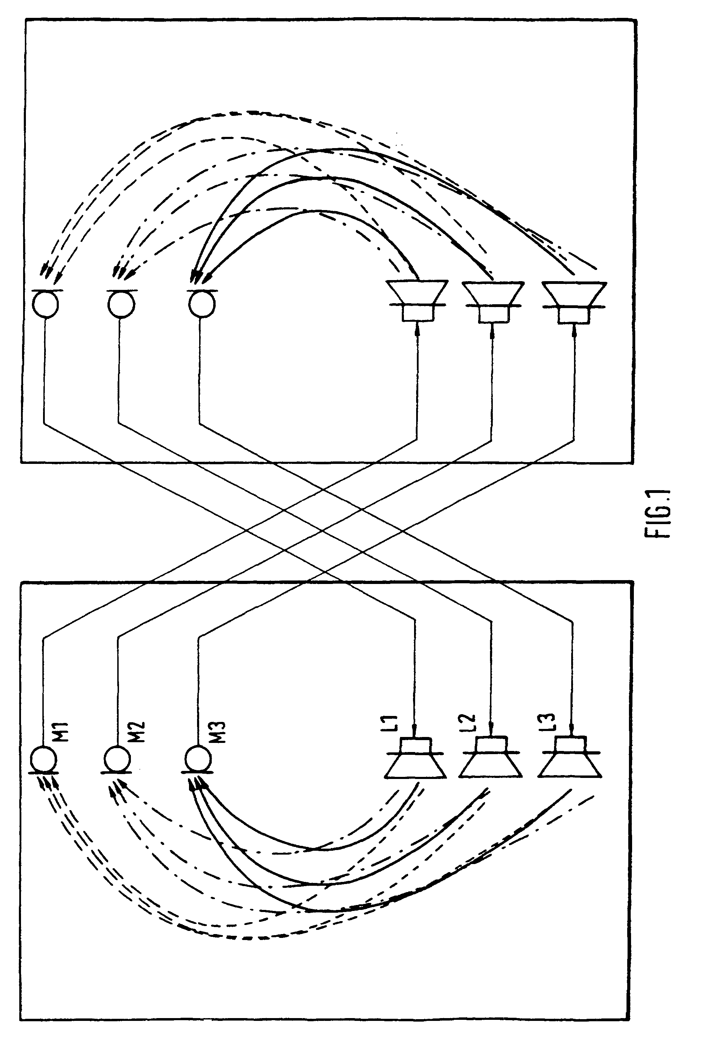

Zur Darstellung der Probleme bei einem Freisprechverfahren für mehrkanalige Übertragungssysteme ist in Fig. 1 ein dreikanaliges Übertragungssystem zwischen einem ersten Raum und einem zweiten Raum dargestellt, wobei sich in dem ersten Raum drei Mikrofone M1, M2, M3 und drei Lautsprecher L1, L2, L3 befinden, zwischen denen es insgesamt neun Kopplungen gibt. Eine wesentliche Aufgabe, die durch das erfindungsgemäße Verfahren gelöst wird, besteht darin, die Kopplungen so zu bestimmen, daß die Stabilität des Systems gewährleistet ist und eine natürliche Unterhaltung zwischen den Teilnehmern im ersten Raum und denen im zweiten Raum ermöglicht wird.

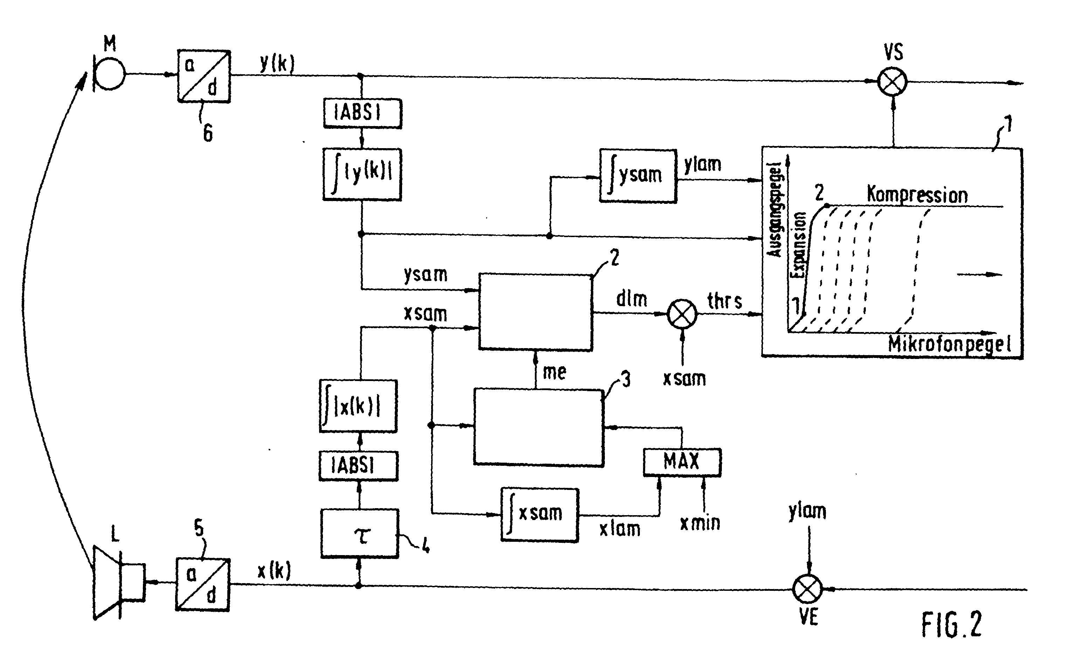

Um das Freisprechverfahren für mehrkanalige Übertragungssysteme besser zu verstehen, wird zunächst das an sich bekannte Freisprechverfahren für ein einkanaliges Übertragungssystem gemäß Fig. 2 erläutert. In Fig. 2 ist ein Sendezweig mit einem Mikrofon M, ein Empfangszweig mit einem Lautsprecher L, eine Schaltungsanordnung zur Bestimmung des Kopplungsfaktors dlm mit einem Kopplungsschätzer 2 und einer Kontrolleinrichtung 3 sowie ein Kompander 1 dargestellt, dessen Übertragungskennlinie in Abhängigkeit von den akustischen Umgebungsbedingungen kurzzeitig verschoben werden kann und somit die Sendeverstärkung VS beeinflußt. Der aktuelle Kopplungsfaktor dlm läßt sich aus dem Verhältnis des Kurzzeitmittelwertes, engl. short average magnitude, ysam des Abtastwertes des Sendesignals y(k) und des Kurzzeitmittelwertes xsam des Abtastwertes des Empfangssignals x(k) gemäß Gleichung (1) ermitteln.

$$dlm = f\left( \frac{ysam}{xsam} \right) \qquad (1)$$

Der Kurzzeitmittelwert des Abtastwertes des Sendesignals ysam setzt sich aus der Summe der Pegel des lokalen Signals und des vom Lautsprecher L zum Mikrofon M gelangenden Rückhörsignals zusammen. Eine brauchbare Messung des Kopplungsfaktors ist jedoch nur dann möglich, wenn der lokale Sprecher nicht spricht und geeignete Signale vom fernen Teilnehmer empfangen werden. Daher wird der Kopplungsschätzer 2 durch die Kontrolleinrichtung 3 gesteuert.

Um gemäß Gleichung (1) das Verhältnis sich entsprechender Signale zu bilden, wird mit einer Verzögerungsleitung 4 die Zeit überbrückt, die das Empfangssignal x(k) von einem D/A-Wandler 5 über den Weg vom Lautsprecher L zum Mikrofon M und einem A/D-Wandler 6 benötigt. Die Verzögerungszeit r muß so dimensioniert werden, daß das Rückhörsignal früher oder gleichzeitig mit dem verzögerten Empfangssignal am Kopplungsschätzer 2 anliegt. Durch die Wahl der Integrationsgrenzen bei der Integration der Beträge der Abtastwerte des Empfangssignals x(k) und des Sendesignals y(k) ist ein Toleranzfenster von etwa 5 m Wegstrecke zwischen Lautsprecher L und Mikrofon M entsprechend der akustischen Laufzeit realisierbar.

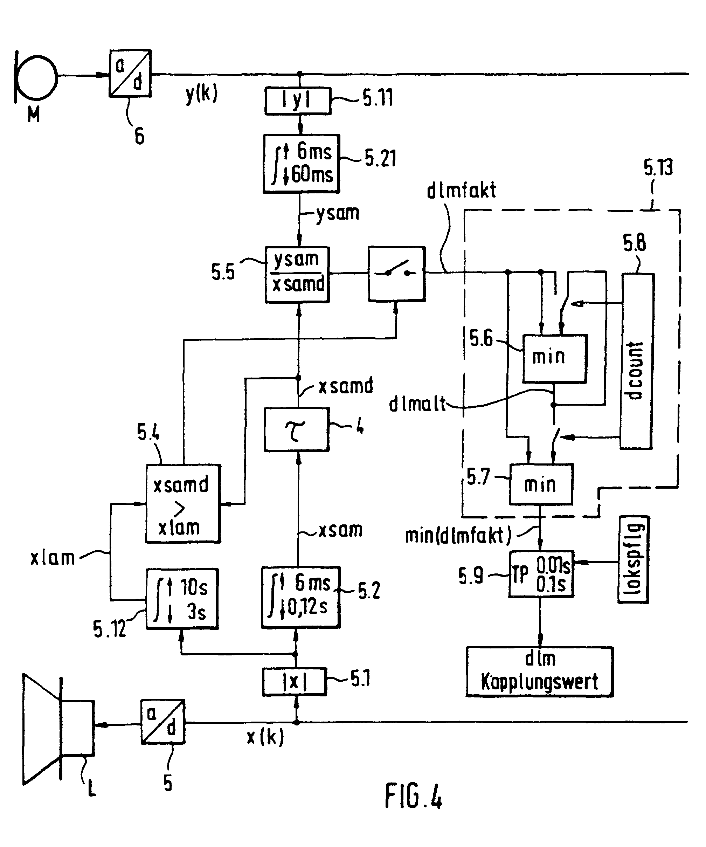

Mit der Kontrolleinrichtung 3 werden die Bedingungen festgelegt, bei denen eine Auswertung des mit Gleichung (1) beschriebenen Quotienten erfolgen darf. Aus dem Kurzzeitmittelwert des Abtastwertes des Empfangssignals xsam wird durch Integration der Langzeitmittelwert des Empfangssignals xlam gebildet. Alternativ zur Integration des Langzeitmittelwerts des Empfangssignals xsam kann auch ein Minimalwertdetektor, wie in Fig. 4 als Baugruppe 5.13 dargestellt, eingesetzt werden. Mit einem solchen Minimalwertdetektor wird der kleinste Kurzzeitmittelwert des Abtastwertes des Empfangssignals min(xsam) erkannt und für ein Zeitintervall von beispielsweise 5 s gehalten. Dadurch ergibt sich die Möglichkeit, Sprache, die sich allgemein durch hohe Dynamik auszeichnet, von einem im allgemeinen gleichförmigeren Umgebungsgeräusch zu unterscheiden. Falls der Kurzzeitmittelwert des Empfangssignals xsam größer ist als der Langzeitmittelwert des Empfangssignals xlam so ist das ein Merkmal dafür, daß der ferne Teilnehmer spricht, der sich kurzzeitig verändernde Sprachpegel hebt sich von dem Geräuschpegel ab. Um zu verhindern, daß bei sehr ruhiger Umgebung bereits bei einem kleinen Kurzzeitmittelwert des Empfangssignals xsam, der nicht unbedingt von einem Sprachsignal herrühren muß, eine Kopplungsfaktorberechnung durchgeführt wird, wird zusätzlich eine Entscheidungsschwelle xmin festgelegt, die von dem Kurzzeitmittelwert des Sendesignals xsam überschritten werden muß. Die Bedingung (2a) oder (2b) für eine Freigabe me zur Berechnung des aktuellen Kopplungsfaktors dlm wird somit:

$$
me = \begin{cases} 1 \text{ falls } xsam > xlam \text{ und } xsam > xmin \\[2ex] 0 \text{ falls } xsam \leq xlam \text{ oder } xsam \leq xmin \end{cases} \tag{2a}
$$

oder

$$
me = \begin{cases} 1 \text{ falls } xsam > min(xsam) \text{ und } xsam > xmin \\[2ex] 0 \text{ falls } xsam \leq min(xsam) \text{ oder } xsam \leq xmin \end{cases} \tag{2b}
$$

Der Kopplungsfaktor dlm wird mit dem Kurzzeitmittelwert des Empfangssignals xsam gewichtet und das daraus entstehende Signal thrs bestimmt die kurzzeitige Verschiebung der Übertragungskennlinie des Kompanders 1. Bei einer festen Kopplung zwischen Lautsprecher L und Mikrofon M, d. h. großem Kopplungsfaktor dlm, wird die Übertragungskennlinie des Kompanders 1 kurzzeitig nach rechts verschoben, so daß die im Mikrofon M eintreffenden Echosignale nicht verstärkt und damit unterdrückt werden. Durch den aus dem Kurzzeitmittelwert des Sendesignals ysam durch Integration gewonnenen Langzeitmittelwert des Sendesignals ylam wird die Übertragungskennlinie des Kompanders 1 in Abhängigkeit von dem aktuellen Umgebungsgeräusch eingestellt und die Verstärkung VE im Empfangszweig bestimmt. Um das Umgebungsgeräusch nicht zum Empfänger zu übertragen, wird mit zunehmendem Umgebungsgeräusch, d. h. mit größer werdendem Langzeitmittelwert ylam die Übertragungskennlinie des Kompanders 1 nach rechts verschoben, so daß die Sendeverstärkung VS so eingestellt wird, daß der Umgebungsgeräuschpegel überschritten werden muß, um ein Signal zum Empfänger zu senden.

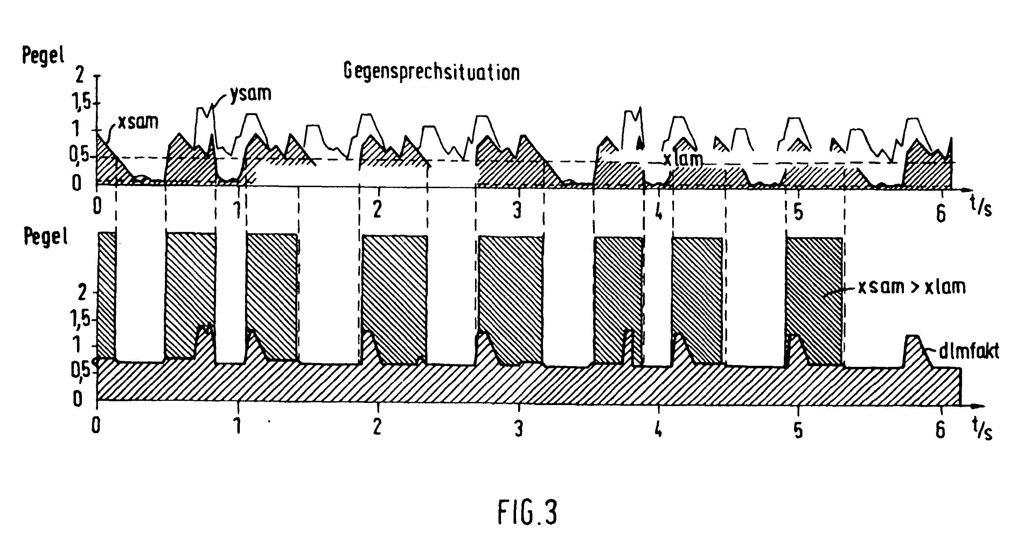

Im folgenden wird nunmehr der Kopplungsschätzer 2 in Fig. 2 unter Zuhilfenahme der Fig. 3 und der Fig. 4 näher beschrieben. Der Übersichtlichkeit halber wurde in Fig. 2 auf eine Unterscheidung zwischen Kurzzeitmittelwert des Empfangssignals xsam und verzögertem Kurzzeitmittelwert des Empfangssignals xsamd verzichtet; diese Unterscheidung wird in Fig. 4 berücksichtigt.

Gemäß Fig. 4 wird zunächst aus dem Abtastwert des Sendesignals y(k) am Mikrofon M durch Betragsbildung 5.11 und folgende Integration 5.21 der Kurzzeitmittelwert des Sendesignals ysam ermittelt. In gleicher Weise wird aus dem Abtastwert des Empfangssignals x(k) am Lautsprecher L durch Betragsbildung 5.1 und durch folgende erste Integration 5.2 der Kurzzeitmittelwert des Empfangssignals xsam sowie durch folgende zweite Integration 5.12 der Langzeitmittelwert des Empfangssignals xlam ermittelt. Aus den bereits oben beschriebenen Gründen wird der Kurzzeitmittelwert des Empfangssignals xsam durch eine Verzögerungsschaltung 4 verzögert, die den verzögerten Kurzzeitmittelwert xsamd liefert. Nunmehr wird gemäß

$$\frac{ysam}{xsamd} = dlmfakt \qquad (3)$$

mit einem Quotientenbildner 5.5 aus den so erhaltenen Signalen ein Quotient gebildet, der ein Kopplungssignal dlmfakt liefert. Dieses Kopplungssignal dlmfakt ist insbesondere durch lokale Schalle, wie beispielsweise Gegensprechen, fehlerbehaftet und ist in dieser Form noch nicht als Maß für den Kopplungsfaktor dlm geeignet.

Fig. 3 zeigt im unteren Teil den zeitlichen Verlauf des Kopplungssignals dlmfakt für eine Gegensprechsituation. Zunächst werden nur solche Kopplungssignale dlmfakt weiter ausgewertet, für die der verzögerte Kurzzeitmittelwert des Empfangssignals xsamd größer als der Langzeitmittelwert des Empfangssignals xlam ist. Die Division nach Gleichung (3) liefert im Fall ohne Gegensprechen immer kleinere Werte als beim Gegensprechen. Gegensprechen tritt jedoch zeitlich begrenzt auf, weil der lokale Sprecher ebenso wie der ferne Sprecher beim Sprechen Wort- und Satzpausen einlegt. Werden nun nur die kleinsten Werte der Divisionsergebnisse innerhalb eines Zeitintervalls, beispielsweise 5 s, zur Bestimmung des Kopplungsfaktors dlm verwendet, ist eine sehr hohe Wahrscheinlichkeit für eine korrekte Messung gegeben. Um den kleinsten Wert des Kopplungssignals dlmfakt zu bestimmen, wird dieses Kopplungssignal dlmfakt einem Minimalwertdetektor 5.13 zugeführt. Der Minimalwertdetektor 5.13 besteht aus einer ersten Speicher- und Vergleichsschaltung 5.6 und einer dieser nachgeschalteten zweiten Speicher- und Vergleichsschaltung 5.7 sowie aus einem Zähler 5.8. Während eines von dem Zähler 5.8 bestimmten Zeitintervalls wird das Ausgangssignal dlmalt der ersten Speicher- und Vergleichsschaltung 5.6 ständig auf den kleineren Wert von dlmalt und dlmfakt erneuert, und die erste Speicher- und Vergleichsschaltung 5.6 sucht somit den kleinsten Wert im Zeitintervall. Bei Rückstellung des Zählers 5.8 wird dieser Wert dlmalt von der zweiten Speicher- und Vergleichsschaltung 5.7 übernommen, während das Ausgangssignal dlmalt der ersten Speicher- und Vergleichsschaltung 5.6 auf das aktuelle Kopplungssignal dlmfakt eingestellt wird, um erneut nach dem kleinsten Wert im folgenden Zeitintervall zu suchen. Mit der zweiten Speicher- und Vergleichsschaltung 5.7 wird der Momentanwert des Koppplungssignals dlmfakt mit dem gespeicherten Ausgangssignal dlmalt der ersten Speicher- und Vergleichsschaltung 5.6 verglichen. Von der zweiten Speicher- und Vergleichsschaltung 5.7 wird jeweils der kleinere Wert übernommen, um somit möglichst schnell den kleinstmöglichen Wert min (dlmfakt) zu finden. Das Ausgangssignal min(dlmfakt) der zweiten Speicher- und Vergleichsschaltung 5.7 wird mit einem Tiefpaß 5.9 gefiltert und liefert dann die beste Schätzung für den Kopplungsfaktor dlm. Die Zeitkonstante des Tiefpasses 5.9 wird durch ein Signal lokspflg wesentlich, beispielsweise um den Faktor 10, erhöht, um ein Ansteigen der Zeitkonstante beim Gegensprechen klein zu halten und bei Systemänderungen, beispielsweise bei einem größeren Kopplungsfaktor, eine Erhöhung der Zeitkonstante zu ermöglichen.

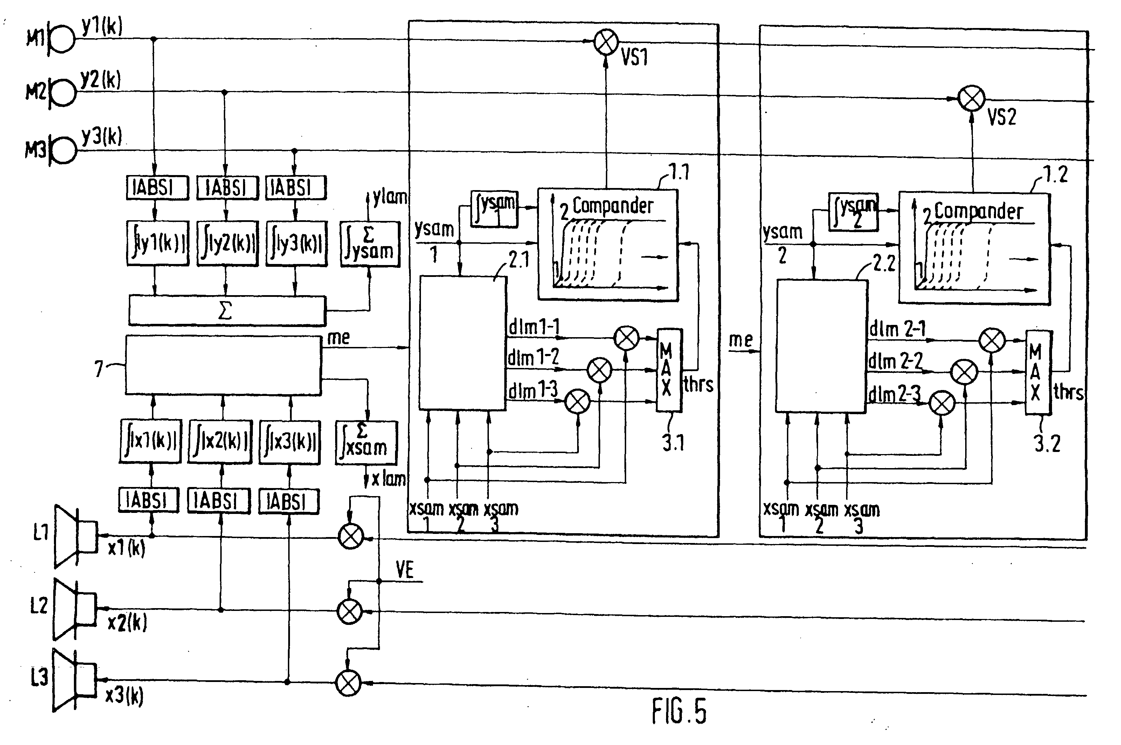

Fig. 5 zeigt eine Systemanordnung für ein mehrkanaliges Freisprechen am Beispiel einer dreikanaligen Anordnung. Für jeden lokalen Teilnehmer ist ein Mikrofon M1, M2, M3 vorhanden. Der Aufstellungsort des jeweiligen Mikrofons M1, M2, M3 entspricht dem Aufstellungsort des jeweiligen Lautsprechers am fernen Ende des Übertragungssystems, bei dem sich eine entsprechende Freisprechanordnung befindet. Jeder ferne Teinehmer wird dementsprechend über einen Lautsprecher L1, L2, L3 wiedergegeben, dessen Aufstellungsort den Platz des Teilnehmers am fernen Ende wiedergibt. Die Anordnung gemäß Fig. 5 besteht aus einem Schaltungsteil zur Bestimmung der Mittelwerte aus den Abtastwerten der Sendesignale y1(k), y2(k), y3(k) und der Mittelwerte aus den Abtastwerten der Empfangssignale x1(k), x2(k), x3(k), aus einer Bewerterschaltung 7 und für jedes Mikrofon M1, M2, M3 aus einer gleichartigen Schaltung zur Bestimmung der Kopplungsfaktoren und der Sendeverstärkung M1 Computation, M2 Computation, M3 Computation. Die den Lautsprechern L1, L2, L3 vorgeschalteten D/A-Wandler und die den Mikrofonen M1, M2, M3 nachgeschalteten A/D-Wandler sind der Übersichtlichkeit wegen in Fig. 5 nicht dargestellt. Die Verstärkungsfaktoren für die Sendesignale VS1, VS2, VS3 werden für jedes Mikrofon M1, M2, M3 getrennt berechnet. Damit wird sowohl eine individuelle Geräuschunterdrückung als auch eine optimale Adaption an den Sprecher erreicht.

Aus den Abtastwerten der Sendesignale y1(k), y2(k), y3(k) werden durch Betragsbildung und anschließende Integration die jeweiligen Kurzzeitmittelwerte ysam1, ysam2, ysam3 gebildet, und durch Integration der Summe dieser Kurzzeitmittelwerte entsteht der Langzeitmittelwert der Sendesignale ylam. In gleicher Weise werden aus den Abtastwerten der Empfangssignale x1(k), x2(k), x3(k) durch Betragsbildung und anschließende Integration die jeweiligen Kurzzeitmittelwerte xsam1, xsam2, xsam3 gebildet, und durch Integration der Summe dieser Kurzzeitmittelwerte entsteht der Langzeitmittelwert der Empfangssignale xlam. Mit Hilfe dieser Mittelwerte werden nunmehr die Bedingungen für die Ermittlung der Kopplungsfaktoren und die Kopplungsfaktoren selbst bestimmt. Aus den Kurzzeitmittelwerten werden gemäß Gleichung (1) die neun Kopplungsfaktoren zwischen den Lautsprechern L1, L2, L3 und den Mikrofonen M1, M2, M3 ermittelt, nämlich für das erste Mikrofon M1

$$\text{dlm } 1\text{-}1 = f_{11}\left(\frac{ysam1}{xsam1}\right)$$

$$\text{dlm } 1\text{-}2 = f_{12}\left(\frac{ysam1}{xsam2}\right) \qquad (4)$$

$$\text{dlm } 1\text{-}3 = f_{13}\left(\frac{ysam1}{xsam3}\right)$$

und entsprechend für weitere Mikrofone, beispielsweise für das dritte Mikrofon M3

$$\text{dlm } 3\text{-}1 = f_{31}\left(\frac{ysam3}{xsam1}\right)$$

$$\text{dlm } 3\text{-}2 = f_{32}\left(\frac{ysam3}{xsam2}\right) \qquad (5)$$

$$\text{dlm } 3\text{-}3 = f_{33}\left(\frac{ysam3}{xsam3}\right)$$

Zur Berechnung der verschiedenen Kopplungsfaktoren wird zunächst aus den Kurzzeitmittelwerten der Empfangssignale xsam1, xsam2, xsam3 der größte Kurzzeitmittelwert xmax und dessen Herkunft location mit der Bewerterschaltung 7 ermittelt. Damit wird ein geeignetes Empfangssignal von einem gerade aktiven Lautsprecher zur Berechnung des Kopplungsfaktors gewonnen. Falls jedoch mehrere Lautsprecher gleichzeitig aktiv sind, wird die Differenz zwischen dem größten Kurzzeitmittelwert xmax und den einzelnen Kurzzeitmittelwerten xsam1, xsam2, xsam3 kleiner als bei nur einem aktiven Lautsprecher, da ein Mikrofon dann mehrere Lautsprechersignale empfängt. Diese Differenz muß eine bestimmte Schwelle xdiff überschreiten, damit eine korrekte Kopplungsfaktorberechnung durchgeführt werden kann. Bei Aktivität mehrerer Lautsprecher wird die Berechnung nicht vorgenommen. Durch die Schwelle xdiff wird die Genauigkeit der Ermittlung des Kopplungsfaktors festgelegt. Mit den bereits bei dem einkanaligen Freisprechverfahren erläuterten Bedingungen für eine Freigabe me zur Berechnung des aktuellen Kopplungsfaktors gemäß der Gleichungen (2a) und (2b) ergeben sich für das mehrkanalige Freisprechverfahren folgende Bedingungen gemäß der Gleichungen (6a) oder (6b):

$$
me = \begin{cases} 1 \ \text{falls} \ xsam > xlam \ \text{und} \ \ xsam > xmin \\ \qquad \text{und} \ \ (xmax - xsamq) > xdiff \\ \\ 0 \ \text{falls} \ xsam \leqq xlam \ \text{oder} \ xlam \leqq xmin \\ \qquad \text{oder} \ (xmax - xsamq) \leqq xdiff \end{cases} \tag{6a}
$$

wobei $xsamq$ mit $q = 1, 2, 3, \ldots$ der nach $xmax$ zweitgrößte Wert ist.

oder

$$
me = \begin{cases} 1 \ \text{falls} \ xsam > \min(xsam) \ \text{und} \ \ xsam > xmin \\ \qquad \text{und} \ \ (xmax - xsamq) > xdiff \\ \\ 0 \ \text{falls} \ xsam \leqq \min(xsam) \ \text{oder} \ xsam \leqq xmin \\ \qquad \text{oder} \ (xmax - xsamq) \leqq xdiff \end{cases} \tag{6b}
$$

wobei $xsamq$ mit $q = 1, 2, 3, \ldots$ der nach $xmax$ zweitgrößte Wert ist.

Anstelle der Differenz $xmax - xsamq$ kann auch die Differenz $\Sigma xsam - xmax$ gebildet werden. Eine kleine Differenz zeigt an, daß die Summe $\Sigma xsam$ überwiegend durch $xmax$ erzeugt wird. Das bedeutet, daß nur ein Lautsprecher aktiv ist und somit eine sichere Berechnung des Kopplungsfaktors möglich ist. Für die Freigabe me der Berechnung gelten dann die Gleichungen (7a) oder (7b):

$$
me = \begin{cases} 1 \ \text{falls} \ xsam > xlam \ \text{und} \ \ xsam > xmin \\ \qquad \text{und} \ \ (\textstyle\sum xsam - xmax) < xdiff \\ \\ 0 \ \text{falls} \ xsam \leqq xlam \ \text{oder} \ xsam \leqq xmin \\ \qquad \text{oder} \ (\textstyle\sum xsam - xmax) \geqq xdiff \end{cases} \tag{7a}
$$

oder

$$
me = \begin{cases} 1 \ \text{falls} \ \text{xsam} > \min(\text{xsam}) \ \text{und} \ \ \text{xsam} > \text{xmin} \\ \qquad\qquad \text{und} \ \ (\textstyle\sum \text{xsam} - \text{xmax}) < \text{xdiff} \\ \\ 0 \ \text{falls} \ \text{xsam} \leqq \min(\text{xsam}) \ \text{oder} \ \text{xsam} \leqq \text{xmin} \\ \qquad\qquad \text{oder} \ (\textstyle\sum \text{xsam} - \text{xmax}) \geqq \text{xdiff} \end{cases} \qquad (7b)
$$

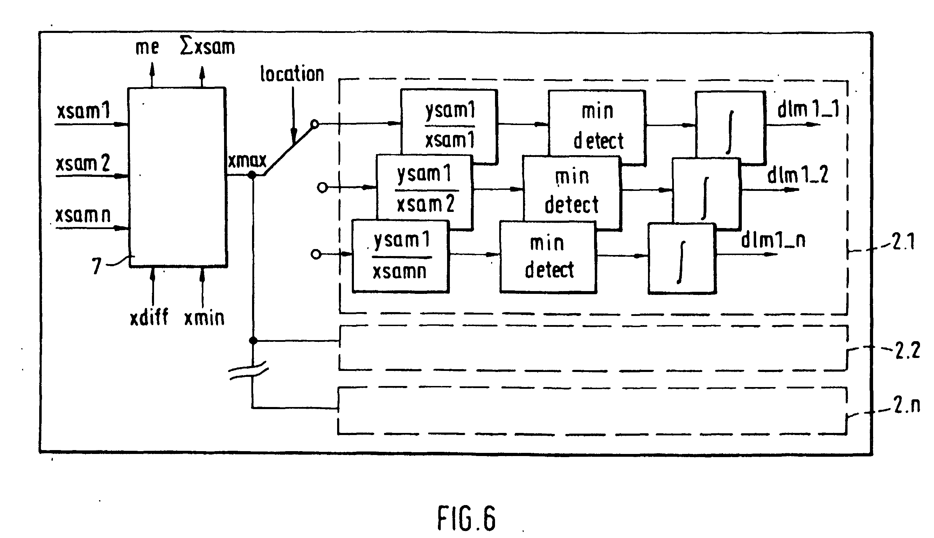

Bei me = 1 erfolgt die Berechnung der Kopplungsfaktoren für jedes Mikrofon getrennt. Fig. 6 zeigt eine detaillierte Darstellung des Kopplungsschätzers 2.1 für das erste Mikrofon M1, eine Darstellung des Kopplungsschätzers 2.2 für das zweite Mikrofon M2 und eine Darstellung des Kopplungsschätzers 2.n für das n-te Mikrofon Mn. Die Berechnung der aktuellen Kopplungsfaktoren erfolgt mittels der in Fig. 4. dargestellten und näher beschriebenen Minimalwertdetektoren min detect. Die berechneten Kopplungsfaktoren bestimmen den Faktor, mit dem der zugehörige Kurzzeitmittelwert des Empfangssignals xsam gewichtet wird, beispielsweise für das erste Mikrofon M1

$$
\begin{aligned}
\text{thrs11} &= \text{dlm 1-1} \ . \ \text{xsam1} \\
\text{thrs12} &= \text{dlm 1-2} \ . \ \text{xsam2} \qquad\qquad (8) \\
\text{thrs13} &= \text{dlm 1-3} \ . \ \text{xsam3}
\end{aligned}
$$

Durch einen ersten Maximalwertentscheider 3.1 für das erste Mikrofon M1 und entsprechend einem zweiten Maximalwertentscheider 3.2 für das zweite Mikrofon M2 wird der maximale Wert der gewichteten Kopplungsfaktoren ermittelt und mit diesem wird dann kurzzeitig eine Verschiebung der Übertragungskennlinie des jeweiligen Kompanders 1.1, 1.2 bewirkt und damit die jeweilige Sendeverstärkung VS1, VS2 bestimmt. Somit wird immer die größte aktuelle Kopplung zur Verschiebung der Übertragungskennlinie wirksam, so daß die Stabilität der Übertragungssysteme gewährleistet wird. Da die Kopplungsfaktoren dlm 1-1 bis dlm 3-3 jeweils einzeln ermittelt werden, wird die geringstmögliche Beeinflussung des Gegensprechens erreicht. Durch die Geräuschunterdrückung an jedem Mikrofon durch Verschiebung der Übertragungskennlinie des Kompanders gemäß dem Langzeitmittelwert des Sendesignals ylam ist eine große Teilnehmeranzahl möglich, ohne den Störabstand zu beeinträchtigen. Ferner wird die Halligkeit, die durch die akustische Kopplung des jeweiligen Sprechers auf benachbarte Mikrofone entsteht, abgeschwächt. Der Langzeitmittelwert des Sendesignals ylam bestimmt die Verstärkung im Empfangszweig VE. Wie in Fig. 5 dargestellt wird die Verstärkung einheitlich für alle Sendezweige eingestellt. Es ist aber auch möglich, die Verstärkungen für jeden Empfangszweig separat über die Langzeitmittelwerte der einzelnen Sendezweige ylam1, ylam2, ylam 3 einzustellen. Das ist insbesondere dann zweckmäßig, wenn die Plätze der Teilnehmer weit voneinander entfernt sind und für jeden Platz die Geräuschsituation unterschiedlich ist.

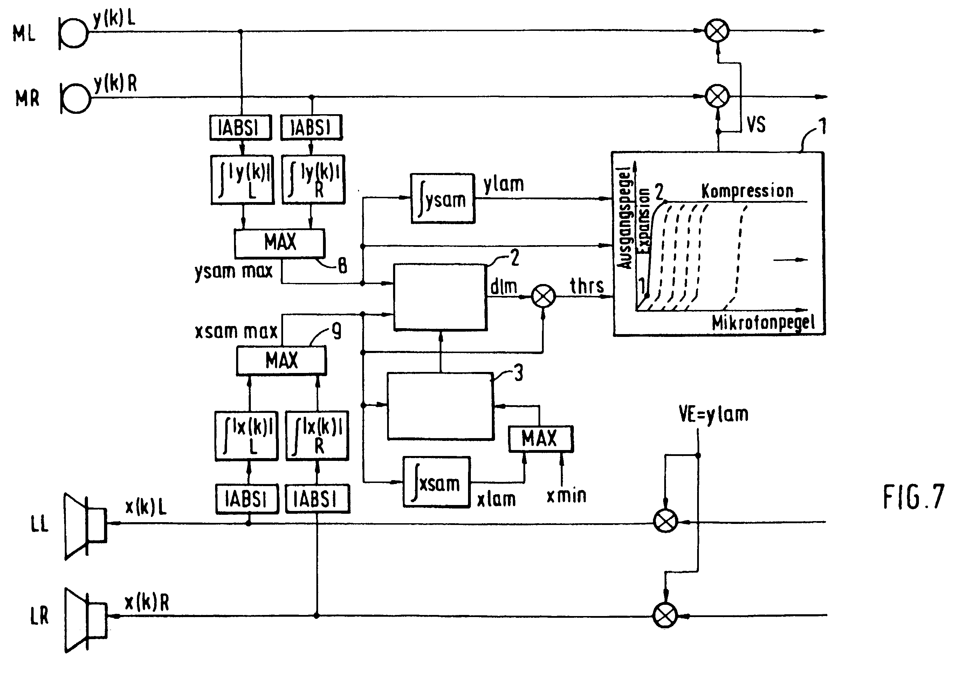

Ein Spezialfall des mehrkanaligen Freisprechens ist das stereophone Freisprechen mit einer Freisprecheinrichtung gemäß Fig. 7. Die verwendeten Lautsprecher LL, LR und Mikrofone MI, MR für die linken und rechten Kanäle sind symmetrisch angeordnet. Verschiedene Sprecherorte werden durch Pegel- und Laufzeitunterschiede zwischen dem linken und rechten Signal repräsentiert. Um die Stereobasis lokal und beim fernen Teilnehmer zu erhalten, müssen beim stereophonen Freisprechen die Kanäle des Empfangszweiges und die Kanäle des Sendezweiges mit jeweils gleicher Verstärkung VE, VS betrieben werden. Grundsätzlich ist es möglich, die bei stereophonen Anordnungen auftretenden vier Kopplungsfaktoren dlm ML-LL, dlm ML-LR, dlm MR-LL, dlm MR-LR, wie beim mehrkanaligen Freisprechen beschrieben, getrennt zu berechnen. Dabei kann aus den vier gewichteten Kopplungsfaktoren zwischen dem rechten und linken Lautsprecher LR, LL und dem rechten und linken Mikrofon MR, ML der Maximalwert als Steuergröße thrs für die Übertragungsfunktion eines Kompanders ermittelt werden, der sowohl den Sendekanal des rechen Mikrofons als auch den Sendekanal des linken Mikrofons zugeordnet ist, so dass die Signale y(k)R, y(k)L auf beiden Sendekanälen mit dem gleichen Verstärkungsfaktor VS verstärket werden. Da die Anordnung der Mikrofone und Lautsprecher jedoch symmetrisch ist, kann die akustische Kopplung zwischen den Lautsprechern LL, LR und den Mikrofonen ML, MR alternativ durch nur einen Kopplungsfaktor dlm beschrieben werden, wenn der jeweils dominierende Kurzzeitmittelwert des Sendesignals und des Empfangssignals ysammax, xsammax zur Berechnung des Kopplungsfaktors dlm verwendet wird und somit der ungünstigste Kopplungsfaktor ermittelt wird. Dazu werden durch Integration der Beträge der Abtastwerte der Sendesignale y(k)L, y(k)R die Kurzzeitmittelwete ysamL, ysamR gebildet und durch einen Maximalwertentscheider 8 miteinander verglichen. Der größere Wert ysammax wird zur Berechnung des aktuellen Kopplungsfaktors dlm eingesetzt und nach Integration als Langzeitmittelwert ylam zur Verschiebung der Übertragungskennlinie des Kompanders 1 und somit zur Einstellung der Sendeverstärkung VS eingesetzt. In gleicher Weise werden durch Integration der Beträge der Abtastwerte der Empfangssignale x(k)L, x(k)R die Kurzzeitmittelwerte xsamL, xsamR gebildet und durch einen weiteren Maximalwertentscheider 9 miteinander verglichen. Der größere Wert xsammax wird zur Berechnung des aktuellen Kopplungsfaktors dlm und zur Wichtung des Kopplungsfaktors dlm für die Bestimmung der Verschiebung der Übertragungskennlinie des Kompanders 1 eingesetzt sowie nach Integration als Langzeitmittelwert xlam als Maß für den Empfangsgeräuschpegel vewendet.

Das erfindungsgemäße Verfahren kann im Vergleich zu bekannten mehrkanaligen Freisprechverfahren mit FIR-Filtern mit geringerem Aufwand realisiert werden. Die Berechnung der einzelnen Kopplungsfaktoren ist sehr viel einfacher als die Bestimmung der Koeffizienten der FIR-Filter. Durch die Verschiebung der Übertragungskennlinie des jeweiligen Kompanders 1.1, 1.2 , die durch die gewichteten Kopplungsfaktoren bestimmt wird, siehe Fig. 5, wird erreicht, daß Umgebungsgeräusche und Echos vollständig bedämpft werden. Die Ansprechschwelle der Übertragungskennlinie des Kompanders wird durch das Umgebungsgeräusch festgelegt, und bei akustischen Echos wird die Übertragungskennlinie automatisch kurzzeitig so nach rechts, wie in den Figuren angedeutet, verschoben, daß die Echos nicht übertragen werden.

**Patentansprüche**

1. Freisprechverfahren für ein mehrkanaliges Übertragungssystem mit einer Vielzahl von Sendekanälen mit jeweils einem Mikrofon als akustoelektrischer Wandler und einer Vielzahl von Empfangskanälen mit jeweils einem Lautsprecher als elektroakustischer Wandler, bei dem für die Bestimmung der Größe der Sendeverstärkung in jedem Sendekanal steuerbare Kompander (1, 1.1, 1.2) eingesetzt werden und bei dem ein für die einkanalige Übertragung vorgesehener Kopplungsschätzer (2) für die Bestimmung der akustischen Kopplung zwischen Lautsprecher und Mikrofon verwendet wird,
   **dadurch gekennzeichnet, dass**
   zwischen jedem Mikrofon (M1, M2, M3, ..., Mn) und jeweils jedem Lautsprecher (L1, L2, L3, ..., Ln) der akustische Kopplungsfaktor (dlm 1-1, dlm 1-2, dlm 1-3, ..., dlm 1-n; dlm 2-1, dlm 2-2, dlm 2-3, ..., dlm 2-n, ..., dlm n-1, dlm n-2, dlm n-3, ..., dlm n-n) ermittelt wird und die für ein Mikrofon (M1) ermittelten Kopplungsfaktoren (dlm 1-1, dlm 1-2, dlm 1-3, ..., dlm 1-n) jeweils mit dem Kurzzeitmittelwert des Empfangssignals (xsam1, xsam2, xsam3, ..., xsamn) des dem Kopplungsfaktor (dlm 1-1, dlm 1-2, dlm 1-3, ..., dlm 1-n) zugeordneten Lautsprechers (L1, L2, L3, ..., Ln) gewichtet werden und daß der daraus ermittelte Maximalwert als Steuergröße (thrs) für die Übertragungsfunktion eines Kompanders (1.1, 1.2, 1.3, ..., 1n) dient, der jedem Sendekanal eines Mikrofons (M1, M2, M3, ..., Mn) zugeordnet ist, so daß somit die Verstärkung, die vom Mikrophonpegel abhängt, jedes Sendekanals (VS1, VS2, VS3, ..., VSn) separat gesteuert wird.

2. Freisprechverfahren für ein stereophones Übertragungssystem mit zwei Sendekanälen mit einem rechten und einem linken Mikrofon (MR, ML) als akustoelektrischer Wandler und zwei Empfangskanälen mit einem rechten und linken Lautsprecher (LR, LL) als elektroakustischer Wandler, bei dem für die Bestimmung der Größe der Sendeverstärkung zumindest ein steuerbarer Kompander eingesetzt und ein Kopplungsschätzer für die Bestimmung der akustischen Kopplung zwischen Lautsprecher (LL, LR) und Mikrofon (ML, MR) verwendet wird, **dadurch gekennzeichnet, dass** zwischen jedem Mikrofon (ML, MR) und jeweils dem Lautsprecher (LL, LR) die bei stereophoner Anordnung auftretenden vier Kopplungsfaktoren dlm ML-LL, dlm ML-LR, dlm MR-LL und dlm MR-LR ermittelt werden und die für ein linkes Mikrofon (ML) ermittelten Kopplungsfaktoren dlm ML-LL und dlm ML-LR jeweils mit dem Kurzzeitmittelwert des Empfangsignals (xsam$_L$, xam$_R$) des dem Kopplungsfaktor zugeordneten Lautsprecher (LL, LR) gewichtet werden sowie die für ein rechtes Mikrofon (MR) ermittelten Kopplungsfaktoren dlm MR-LL und dlm MR-LR jeweils mit dem Kurzzeitmittelwert des Empfangsignals (xsam$_L$, xsam$_R$) des dem Kopplungsfaktor zugeordneten Lautsprecher (LL, LR) gewichtet werden, und wobei aus den vier gewichteten Kopplungsfaktoren zwischen dem rechten und linken Lautsprecher (LR, LL) und dem rechten und linken Mikrofon (MR, ML) der Maximalwert als Steuergröße (thrs) für die Übertragungsfunktion eines Kompanders verwendet wird, wobei der kompander sowohl dem Sendekanal des rechten Mikrofons als auch dem Sendekanal des linken Mikrofons zugeordnet ist, so dass die Signale (y(k)R, y(k)L) auf beiden Sendekanälen mit dem gleichen Verstärkungsfaktor (VS) verstärkt werden.

3. Freisprechverfahren nach Anspruch 1 oder 2,
   **dadurch gekennzeichnet, daß** der Kopplungsfaktor zwischen einem Lautsprecher und einem Mikrofon nur dann bestimmt wird, wenn folgende aus dem Abtastwert des digitalen Empfangssignals (x(k)) am Lautsprecher abgeleitete Bedingungen erfüllt sind:

- Der Kurzzeitmittelwert des Empfangssignals (xsam) muß größer als der Langzeitmittelwert des Empfangssignals (xlam) sein, d. h. xsam > xlam, oder der Kurzzeitmittelwert des Empfangssignals (xsam) muß größer als der kleinste Kurzzeitmittelwert des Empfangssignals (min (xsam)) sein, d. h. xsam > min (xsam)
- der Kurzzeitmittelwert des Empfangssignals (xsam) muß eine definierte Schwelle (xmin) überschreiten, d. h. xsam > xmin,
- die Differenz aus dem größten Kurzzeitmittelwert der Kurzzeitmittelwerte der Empfangssignale (max (xsamq) mit q = 1, 2, ..., n) an den Lautsprechern und dem zweitgrößten Kurzzeitmittelwert (xsamq) muß größer als eine definierte Schwelle sein, d. h. (xmax - xsamq) > xdiff .

4. Freisprechverfahren nach Anspruch 1 oder 2, **dadurch gekennzeichnet, daß** der Kopplungsfaktor zwischen einem Lautsprecher und einem Mikrofon nur dann bestimmt wird, wenn folgende aus dem Momentanwert des digitalten Empfangssignals (x(k)) am Lautsprecher abgeleitete Bedingungen erfüllt sind:

- Der Kurzzeitmittelwert des Empfangssignals (xsam) muß größer als der Langzeitmittelwert des Empfangssignals (xlam) sein, d. h. xsam > xlam, oder der Kurzzeitmittelwert des Empfangssignals (xsam) muß größer als der kleinste Kurzzeitmittelwert des Empfangssignals (min (xsam)) sein, d. h. xsam > min (xsam)
- der Kurzzeitmittelwert des Empfangssignals (xsam) muß eine definierte Schwelle (xmin) überschreiten, d. h. xsam > xmin,
- die Differenz aus der Summe aller Kurzzeitmittelwerte der Empfangssignale (Σxsam) und dem größten Kurzzeitmittelwert der Empfangssignale (xmax) muß kleiner als eine definierte Schwelle sein, d. h. (Σxsam - xmax) < xdiff.

5. Freisprechverfahren nach Anspruch 1, **dadurch gekennzeichnet, daß** zur Bestimmung der Kopplungsfaktoren aus den Kurzzeitmittelwerten (xsam1, xsam2, ..., xsamn) der Abtastsignale (x1(k), x2(k), ..., xn(k)) der maximale Kurzzeitmittelwert (xmax) und der diesem maximalen Kurzzeitmittelwert (xmax) zugehörende Empfangskanal (location) bestimmt wird und daß dann die aktuellen Kopplungsfaktoren zwischen dem den Empfangskanal abschließenden Lautsprecher und den Mikrofonen (M1, M2, ..., Mn) berechnet werden.

6. Freisprechverfahren nach Anspruch 5, **dadurch gekennzeichnet, daß** zur Berechnung des aktuellen Kopplungsfaktors (dlm) zunächst der Momentanwert der Kopplung (dlmfakt) zwischen einem Lautsprecher und einem Mikrofon aus dem Quotienten aus dem entsprechenden Kurzzeitmittelwert des Sendesignals (ysam) und dem entsprechenden Kurzzeitmittelwert des Empfangssignals (xsam) gebildet wird und daß der aktuelle Kopplungsfaktor (dlm) mit einem ersten Minimalwertdetektor (5.13) ermittelt wird, bei dem in einer ersten Speicherund Vergleichsschaltung (5.6) in einem durch einen Zähler (5.8) festgelegten Zeitintervall der kleinste Kopplungswert (dlmalt) ermittelt und einer zweiten Speicher- und Vergleichsschaltung (5.7) übergeben wird, die jeweils den Momentanwert des Kopplungssignals (dlmfakt) mit dem von ihr gespeicherten kleinsten Kopplungswert (dlmalt) der ersten Speicher- und Vergleichsschaltung (5.6) vergleicht, um einen absoluten minimalen Kopplungswert (min(dlmfakt)) zu finden, der ein Optimum des aktuellen Kopplungsfaktors (dlm) ist.

7. Freisprechverfahren für ein stereophones Übertragungssystem mit zwei Sendekanälen und einem rechten und einem linken Mikrofon (MR, ML) als elektroakustische Wandler und zwei Empfangskanälen mit einem rechten und einem linken Lautsprecher (LR, LL) als elektroakustische Wandler, bei dem für die Bestimmung der Größe der Sendeverstärkung ein steuerbarer Kompander eingesetzt und ein Kopplungsschätzer für die Bestimmung der akustischen Kopplung zwischen Lautsprecher (LL, LR) und Mikrofon (ML, MR) verwendet wird, **dadurch gekennzeichnet, dass** die akustische Kopplung zwischen dem rechten und linken Lautsprecher (LR, LL) und dem rechten und linken Mikrofon (MR, ML) durch nur einen Kopplungsfaktor beschrieben wird, wobei ein dominierender Kurzzeitmittelwert (ysammax) des Sendesignals mittels Maximalwertbildung aus Kurzzeitmittelwerten des linken und rechten Sendesignals, ein dominierenden Kurzzeitmittelwert (xsammax) des Empfangssignals mittels Maximalwertbildung aus Kurzzeitmittelwerten des rechten und linken Empfangssignals, und der Kopplungsfaktor (dlm) aus dem Quotienten des dominierenden Kurzzeitmittelwertes des Sendesignals (ysammax) und des dominierenden Kurzzeitmittelwertes des Empfangssignals (xsammax) ermittelt wird, und wobei der Kopplungsfaktor zur Bestimmung der Verschiebung der Übertragungskennlinien des Kompanders mit den dominierenden Kurzzeitmittelwert des Empfangssignals (xsammax) gewichtet wird, so dass die Verstärkung (VS), die vom Mikrofonpegel abhängt, jedes Sendekanals gesteuert wird.

**8.** Schaltungsanordnung zur Durchführung eines Freisprechverfahrens für ein mehrkanaliges Übertragungssystem unter Anwendung von steuerbaren Kompandern (1.1, 1.2, ..., 1.n) und Kopplungsschätzern (2.1, 2.2, ..., 2.n), **dadurch gekennzeichnet, daß** jeder Sendekanal über einen Betragsbildner und einen Integrator mit einer Summierschaltung verbunden ist, deren Ausgang über einen weiteren Integrator (ylam) jeweils mit den Empfangsverstärkern der Empfangskanäle (VE) verbunden ist, daß jeder verstärkte Empfangskanal(VE) über einen Betragsbildner und einen Integrator mit einer Bewerterschaltung (7) verbunden ist, deren Ausgang (me) an jeweils einen jedem Sendekanal zugeordneten Kopplungsschätzer (2.1, 2.2, ... 2.n) geschaltet ist, und dass die Kurzzeitmittelwerte der Sende -und Empfangssignale als weitere Eingänge des Kopplungsschätzers (2.1,2.2, ) geschaltet sind, dessen Ausgänge über eine Wichtung mit den Kurzzeitmittelwerten an einen Maximalwertentscheider (3.1, 3.2, ..., 3.n) geführt sind und dass der Ausgang des Maximalwertentscheiders (3.1, 3.2, ..., 3.n) an einen Regeleingang des Kompanders (1.1, 1.2, ..., 1.n) geschaltet ist, der die jeweilige Verstärkung des Sendekanals, die vom Mikrophonpegel abhängt, bestimmt.

**Claims**

**1.** Hands-free speech method for a multi-channel transmission system with multiple transmission channels each with a microphone as an acousto-electrical converter and multiple reception channels each with a loudspeaker as an electro-acoustic converter, in which, to determine the magnitude of the transmission amplification in each transmission channel, controllable companders (1, 1.1, 1.2) are used, and in which a coupling estimator (2) which is provided for one-channel transmission is used to determine the acoustic coupling between loudspeaker and microphone,
**characterized in that**
between each microphone (M1, M2, M3, ..., Mn) and each loudspeaker (L1, L2, L3, ..., Ln) the acoustic coupling factor (dlm 1-1, dlm 1-2, dlm 1-3, ..., dlm 1-n; dlm 2-1, dlm 2-2, dlm 2-3, ..., dlm 2-n, ..., dlm n-1, dlm n-2, dlm n-3, ..., dlm n-n) is determined, and the coupling factors (dlm 1-1, dlm 1-2, dlm 1-3, ..., dlm 1-n) which are determined for a microphone (Ml) are each weighted with the short average magnitude of the received signal (xsam1, xsam2, xsam3, ..., xsamn) of the loudspeaker (L1, L2, L3, ..., Ln) which is assigned to the coupling factor (dlm 1-1, dlm 1-2, dlm 1-3, ..., dlm 1-n), and that the maximum value which is determined therefrom is used as the control magnitude (thrs) for the transmission function of a compander (1.1, 1.2, 1.3, ..., 1n), which is assigned to each transmission channel of a microphone (M1, M2, M3, ..., Mn), so that thus the amplification, which depends on the microphone level, of each transmission channel (VS1, VS2, VS3, ..., VSn) is controlled separately.

**2.** Hands-free speech method for a stereophonic transmission system with two transmission channels with a right-hand and a left-hand microphone (MR, ML) as an acousto-electrical converter and two reception channels with a right-hand and a left-hand loudspeaker (LR, LL) as an electro-acoustic converter, in which to determine the magnitude of the transmission amplification, at least one controllable compander is used, and a coupling estimator is used to determine the acoustic coupling between loudspeaker (LL, LR) and microphone (ML, MR), **characterized in that** between each microphone (ML, MR) and each loudspeaker (LL, LR) the four coupling factors dlm ML-LL, dlm ML-LR, dlm MR-LL and dlm MR-LR which occur in a stereophonic arrangement are determined, and the coupling factors dlm ML-LL and dlm ML-LR which are determined for a left-hand microphone (ML) are each weighted with the short average magnitude of the received signal ($xsam_L$, $xsam_R$) of the loudspeaker (LL, LR) which is assigned to the coupling factor, and the coupling factors dlm MR-LL and dlm MR-LR which are determined for a right-hand microphone (MR) are each weighted with the short average magnitude of the received signal ($xsam_L$, $xsam_R$) of the loudspeaker (LL, LR) which is assigned to the coupling factor, and of the four weighted coupling factors between the right-hand and left-hand loudspeaker (LR, LL) and the right-hand and left-hand microphone (MR, ML), the maximum value is used as a control magnitude (thrs) for the transmission function of a compander, which is assigned to both the transmission channel of the right-hand microphone and the transmission channel of the left-hand microphone, so that the signals (y(k)R, y(k)L) on both transmission channels are amplified with the same amplification factor (VS).

**3.** Hands-free speech method according to Claim 1 or 2, **characterized in that** the coupling factor between a loudspeaker and a microphone is determined only if the following conditions, which are derived from the sampled value of the digital received signal (x(k)) at the loudspeaker, are fulfilled:

- the short average magnitude of the received signal (xsam) must be greater than the long average magnitude of the received signal (xlam), i.e. xsam > xlam, or the short average magnitude of the received signal (xsam) must be greater than the smallest short average magnitude of the received signal (min(xsam)), i.e. xsam > min(xsam),

- the short average magnitude of the received signal (xsam) must exceed a defined threshold (xmin), i.e. xsam > xmin,

- the difference of the greatest short average magnitude of the short average magnitudes of the received signals (max(xsamq), where q = 1, 2, ..., n) at the loudspeakers and the second greatest short average magnitude (xsamq) must be greater than a defined threshold, i.e. (xmax - xsamq) > xdiff.

4. Hands-free speech method according to Claim 1 or 2, **characterized in that** the coupling factor between a loudspeaker and a microphone is determined only if the following conditions, which are derived from the instantaneous value of the digital received signal (x(k)) at the loudspeaker, are fulfilled:

- the short average magnitude of the received signal (xsam) must be greater than the long average magnitude of the received signal (xlam), i.e. xsam > xlam, or the short average magnitude of the received signal (xsam) must be greater than the smallest short average magnitude of the received signal (min(xsam)), i.e. xsam > min(xsam),

- the short average magnitude of the received signal (xsam) must exceed a defined threshold (xmin), i.e. xsam > xmin,

- the difference of the sum of all short average magnitudes of the received signals (Σxsam) and the greatest short average magnitude of the received signals (xmax) must be smaller than a defined threshold, i.e. (Σxsam - xmax) < xdiff.

5. Hands-free speech method according to Claim 1,
**characterized in that** to determine the coupling factors from the short average magnitudes (xsam1, xsam2, ..., xsamn) of the sampled signals (x1(k), x2(k), ..., xn(k)), the maximum short average magnitude (xmax) and the reception channel (location) which is associated with this maximum short average magnitude (xmax) are determined, and that then the existing coupling factors between the loudspeaker which terminates the reception channel and the microphones (M1, M2, ..., Mn) are calculated.

6. Hands-free speech method according to Claim 5,
**characterized in that** to calculate the existing coupling factor (dlm), first the instantaneous value of the coupling (dlmfakt) between a loudspeaker and a microphone is formed from the quotient of the corresponding short average magnitude of the transmitted signal (ysam) and the corresponding short average magnitude of the received signal (xsam), and that the existing coupling factor (dlm) is determined using a first minimum value detector (5.13), in which, in a first memory and comparison circuit (5.6), the smallest coupling value (dlmalt) in a time interval defined by a counter (5.8) is determined and passed to a second memory and comparison circuit (5.7), which compares the instantaneous value of the coupling signal (dlmfakt) with the smallest coupling value (dlmalt), which it has stored, of the first memory and comparison circuit (5.6), to find an absolute minimum coupling value (min(dlmfakt)), which is an optimum of the existing coupling factor (dlm).

7. Hands-free speech method for a stereophonic transmission system with two transmission channels and a right-hand and a left-hand microphone (MR, ML) as electro-acoustic converters and two reception channels with a right-hand and a left-hand loudspeaker (LR, LL) as electro-acoustic converters, in which to determine the magnitude of the transmission amplification, a controllable compander is used, and a coupling estimator is used to determine the acoustic coupling between loudspeaker (LL, LR) and microphone (ML, MR), **characterized in that** the acoustic coupling between the right-hand and left-hand loudspeaker (LR, LL) and the right-hand and left-hand microphone (MR, ML) is described by only one coupling factor, a dominating short average magnitude (ysammax) of the transmitted signal being determined by maximum magnitude formation from short average magnitudes of the left-hand and right-hand transmitted signal, a dominating short average magnitude (xsammax) of the received signal being determined by maximum magnitude formation from short average magnitudes of the left-hand and right-hand received signal, and the coupling factor (dlm) being determined from the quotient of the dominating short average magnitude of the transmitted signal (ysammax) and the dominating short average magnitude of the received signal (xsammax), and the coupling factor to determine the displacement of the transmission characteristic curves of the compander being weighted with the dominating short average magnitude of the received signal (xsammax), so that the amplification (VS), which depends on the microphone level, of each transmission channel is controlled.

8. Circuit arrangement to implement a hands-free speech method for a multi-channel transmission system using controllable companders (1.1, 1.2, ..., 1.n) and coupling estimators (2.1. 2.2. ..., 2.n), **characterized in that** each transmission channel is connected via an absolute value former and an integrator to a summing circuit, the output of which is connected via a further integrator (ylam) to each of the reception amplifiers of the reception channels (VE),
that each amplified reception channel (VE) is connected via an absolute value former and an integrator to an evaluator circuit (7), the output (me) of which is connected to a coupling estimator (2.1, 2.2, ..., 2.n) which is assigned to each transmission channel, and that the short average magnitudes of the transmission and reception signals are connected as further inputs of the coupling estimator (2.1, 2.2,), the outputs of which are fed via a weighting with the short average magnitudes to a maximum value decider (3.1, 3.2, ..., 3.n), and that the output of the maximum value decider (3.1, 3.2, ..., 3.n) is connected to a regulating input of the compander (1.1, 1.2, ..., 1.n), which determines the amplification, which depends on the microphone level, of the transmission channel.


**Revendications**

1. Procédé de conversation mains libres pour un système de transmission multicanaux comprenant une pluralité de canaux d'émission avec respectivement un microphone comme convertisseur acousto-électrique et une pluralité de canaux de réception avec respectivement un haut-parleur comme convertisseur électroacoustique, dans lequel on utilise des compresseurs-expanseurs (1, 1.1, 1.2) contrôlables dans chaque canal d'émission pour le calcul de la grandeur de l'amplification d'émission et dans lequel on utilise un estimateur de couplage (2) prévu pour la transmission monocanal pour le calcul du couplage acoustique entre le haut-parleur et le microphone, **caractérisé en ce que**
le facteur de couplage acoustique (dlm 1-1, dlm 1-2, dlm 1-3, ..., dlm 1-n ; dlm 2-1 ; dlm 2-2, dlm 2-3, ..., dlm 2-n, ..., dlm n-1, dlm n-2, dlm n-3, ..., dlm n-n) est calculé entre chaque microphone (M1, M2, M3, ..., Mn) et respectivement chaque haut-parleur (L1, L2, L3, ..., Ln) et les facteurs de couplage (dlm 1-1, dlm 1-2, dlm 1-3, ..., dlm 1-n) calculés pour un microphone (M1) sont pondérés respectivement avec la valeur moyenne de courte durée du signal de réception (xsam1, xsam2, xsam3, ..., xsamn,) du haut-parleur (L1, L2, L3, ..., Ln) attribué au facteur de couplage (dlm 1-1, dlm 1-2, dlm 1-3, ..., dlm 1-n) et **en ce que** la valeur maximale calculée à partir de là sert de grandeur de commande (thrs) pour la fonction de transmission d'un compresseur-expanseur (1.1, 1.2, 1.3, ..., 1.n) qui est attribué à chaque canal d'émission d'un microphone (M1, M2, M3, ..., Mn), de sorte que l'amplification, qui dépend du niveau du microphone, de chaque canal d'émission (VS1, VS2, VS3, ...VSn) est commandée de ce fait séparément.

2. Procédé de conversation mains libres pour un système de transmission stéréophonique comprenant deux canaux d'émission avec un microphone gauche et un microphone droit (MR, ML) comme convertisseur acousto-électrique et deux canaux de réception avec un haut-parleur droit et un haut-parleur gauche (LR, LL) comme convertisseur électroacoustique, dans lequel on utilise au moins un compresseur-expanseur contrôlable pour le calcul de la grandeur de l'amplification d'émission et un estimateur de couplage pour le calcul du couplage acoustique entre le haut-parleur (LL, LR) et le microphone (ML, MR), **caractérisé en ce que** quatre facteurs de couplage dlm ML-LL, dlm ML-LR, dlm MR-LL et dlm MR-LR, qui apparaissent avec un dispositif stéréophonique, sont calculés entre chaque microphone (ML, MR) et respectivement le haut-parleur (LL, LR) et les facteurs de couplage dlm ML-LL et dlm ML-LR calculés pour un microphone gauche (ML) sont pondérés respectivement avec la valeur moyenne de courte durée du signal de réception (xsam$_L$, xsam$_R$) du haut-parleur (LL, LR) attribué au facteur de couplage et les facteurs de couplage dlm MR-LL et dlm MR-LR calculés pour un microphone droit (MR) sont pondérés respectivement avec la valeur moyenne de courte durée du signal de réception (xsam$_L$, xsam$_R$) du haut-parleur (LL, LR) attribué au facteur de couplage, et à partir des quatre facteurs de couplage pondérés entre le haut-parleur droit et le haut-parleur gauche (LR, LL) et le microphone droit et le microphone gauche (MR, ML), la valeur maximale étant utilisée comme grandeur de commande (thrs) pour la fonction de transmission d'un compresseur-expanseur, le compresseur-expanseur étant attribué aussi bien au canal d'émission du microphone droit qu'au canal d'émission du microphone gauche, de sorte que les signaux (y(k)R, y(k)L) sont amplifiés sur les deux canaux d'émission avec le même facteur d'amplification (VS).

3. Procédé de conversation mains libres selon la revendication 1 ou 2, **caractérisé en ce que** le facteur de couplage entre un haut-parleur et un microphone n'est déterminé que dans les cas où les conditions suivantes, déduites de la valeur de balayage du signal de réception (x(k)) numérique sur le haut-parleur sont satisfaites :

- la valeur moyenne de courte durée du signal de réception (xsam) doit être supérieure à la valeur moyenne de longue durée du signal de réception (xlam), c'est-à-dire xsam > xlam, ou la valeur moyenne de courte durée du signal de réception (xsam) doit être supérieure à la valeur moyenne maximale de courte durée du signal de réception (min (xsam)), c'est-à-dire xsam > min (xsam)
- la valeur moyenne de courte durée du signal de réception (xsam) doit dépasser un seuil défini (xmin), c'est-à-dire xsam > xmin,
- la différence calculée à partir de la valeur moyenne maximale de courte durée des valeurs moyennes de courte durée des signaux de réception (max (xsamq) avec q = 1, 2, ...n) sur les haut-parleurs et de la seconde valeur moyenne de courte durée la plus grande (xsamq) doit être supérieure à un seuil défini, c'est-à-dire (xmax - xsamq) > xdiff.

4. Procédé de conversation mains libres selon la revendication 1 ou 2, **caractérisé en ce que** le facteur de couplage entre un haut-parleur et un microphone n'est déterminé que dans les cas où les conditions suivantes, déduites de la valeur momentanée du signal de réception numérique (x(k)) sur le haut-parleur sont satisfaites :

- la valeur moyenne de courte durée du signal de réception (xsam) doit être supérieure à la valeur moyenne de longue durée du signal de réception (xlam), c'est-à-dire xsam > xlam, ou bien la valeur moyenne de courte durée du signal de réception (xsam) doit être supérieure à la valeur moyenne minimale de courte durée du signal de réception (min (xsam)), c'est-à-dire xsam > min (xsam)
- la valeur moyenne de courte durée du signal de réception (xsam) doit dépasser un seuil défini (xmin) c'est-à-dire xsam > xmin,
- la différence calculée à partir de la somme de toutes les valeurs moyennes de courte durée des signaux de réception (Σxsam) et de la valeur moyenne maximale de courte durée des signaux de réception (xmax) doit être inférieure à un seuil défini, c'est-à-dire (Σxsam - xmax) < xdiff.

5. Procédé de conversation mains libres selon la revendication 1, **caractérisé en ce que**, pour le calcul des facteurs de couplage à partir des valeurs moyennes de courte durée (xsam1, xsam2, ..., xsamn) des signaux de balayage (xl(k), x2(k), ..., xn(k)), on calcule la valeur moyenne maximale de courte durée (xmax) et le canal de réception (location) appartenant à cette valeur moyenne maximale de courte durée (xmax) et **en ce que** les facteurs de couplage actuels entre le haut-parleur terminant le canal de réception et les microphones (M1, M2, ..., Mn) sont calculés.

6. Procédé de conversation mains libres selon la revendication 5, **caractérisé en ce que**, pour le calcul du facteur de couplage actuel (dlm), on forme d'abord la valeur momentanée du couplage (dlmfakt) entre un haut-parleur et un microphone à partir des quotients résultant de la valeur moyenne de courte durée correspondante du signal d'émission (ysam) et de la valeur moyenne de courte durée correspondante du signal de réception (xsam) et **en ce que** le facteur de couplage actuel (dlm) est calculé avec un premier détecteur de valeur minimum (5.13), dans lequel la valeur de couplage minimale (dlmalt) est déterminée dans un premier circuit de stockage et de comparaison (5.6) dans un intervalle de temps défini par un compteur (5.8) et est transmise à un second circuit de stockage et de comparaison (5.7), qui compare respectivement la valeur momentanée du signal de couplage (dlmfakt) avec la valeur de couplage (dlmalt) minimale, stockée par ce circuit, du premier circuit de stockage et de comparaison (5.6), afin de trouver une valeur de couplage minimale absolue (min (dlmfakt)), qui est un optimum du facteur de couplage actuel (dlm).

7. Procédé de conversation mains libres pour un système de transmission stéréophonique comprenant deux canaux d'émission et un microphone droit et un microphone gauche (MR, ML) comme convertisseurs électroacoustiques et deux canaux de réception avec un haut-parleur droit et un haut-parleur gauche (LR, LL) comme convertisseurs électroacoustiques, dans lesquels on utilise un compresseur-expanseur contrôlable pour le calcul de la grandeur de l'amplification d'émission et on utilise un estimateur de couplage pour le calcul du couplage acoustique entre le haut-parleur (LL, LR) et le microphone (ML, MR), **caractérisé en ce que** le couplage acoustique entre le haut-parleur droit et le haut-parleur gauche (LR, LL) et le microphone droit et le microphone gauche (ML, MR) est décrit par seulement un facteur de couplage d'une valeur moyenne dominante de courte durée (ysammax) du signal d'émission étant déterminée par formation de la valeur maximale à partir de valeurs moyennes de courte durée des signaux d'émission gauche et droit, une valeur moyenne dominante de courte durée (xsammax) du signal d'émission étant calculée par formation de valeur maximale à partir des valeurs moyennes de courte durée des signaux de réception droit et gauche, et le facteur de couplage (dlm) étant calculé à partir du quotient de la valeur moyenne dominante de courte durée du signal d'émission (ysammax) et de la valeur moyenne dominante de courte durée du signal de réception (xsammax), et le facteur de couplage pour le calcul du déplacement des courbes caractéristiques de transmission du compresseur-expanseur étant pondéré avec la valeur moyenne dominante de courte durée du signal de réception (xsammax), de sorte que l'amplification (VS), qui dépend du niveau du microphone, de chaque canal d'émission est contrôlé.

8. Dispositif de circuit pour la réalisation d'un procédé de conversation mains libres pour un système de transmission multicanaux avec utilisation de compresseurs-expanseurs (1.1, 1.2, ..., 1.n) et estimateurs de couplage (2.1, 2.2, ..., 2.n) contrôlables, **caractérisé en ce** chaque canal d'émission est relié par un formateur de somme et un intégrateur à un circuit totalisateur, dont la sortie est reliée par un autre intégrateur (ylam) respectivement aux amplificateurs de réception des canaux de réception (VE), en ce que chaque canal de réception (VE) amplifié est relié par un formateur de somme et un intégrateur à un circuit évaluateur (7), dont la sortie (me) est commutée sur respectivement un estimateur de couplage (2.1, 2.2, ..., 2.n) attribué à chaque canal d'émission et en ce que les valeurs moyennes de courte durée des signaux d'émission et de réception sont commutées comme autres entrées de l'estimateur de couplage (2.1, 2.2), dont les sorties sont guidées au moyen d'une pondération avec les valeurs moyennes de courte durée sur un décideur de valeur maximale (3.1, 3.2, ..., 3.n) et en ce que la sortie du décideur de valeur maximale (3.1, 3.2, ..., 3.n) est commutée sur une entrée de réglage du compresseur-expanseur (1.1, 1.2, ..., 1.n), lequel donne une amplification respective du canal d'émission, qui dépend du niveau du microphone.

FIG.1

FIG.2

FIG.3

FIG.4

FIG.5

FIG.6

FIG.7

EP 0 742 664 B1